(19) Europäisches Patentamt / European Patent Office / Office européen des brevets

(11) **EP 1 261 095 B1**

(12) **FASCICULE DE BREVET EUROPEEN**

(45) Date de publication et mention
de la délivrance du brevet:
**12.07.2017  Bulletin 2017/28**

(51) Int Cl.:
**H02J 1/02** *(2006.01)*     *B60R 16/03 (2006.01)*

(21) Numéro de dépôt: **02291183.8**

(22) Date de dépôt: **13.05.2002**

(54) **Réseau de distribution automobile**

Bordnetz für ein Kraftfahrzeug

Vehicle power supply network

(84) Etats contractants désignés:
**DE ES FR GB IT**

(30) Priorité:  **18.05.2001  FR 0106582**

(43) Date de publication de la demande:
**27.11.2002  Bulletin 2002/48**

(73) Titulaire: **JOHNSON CONTROLS AUTOMOTIVE ELECTRONICS**
**95520 Osny (FR)**

(72) Inventeur: **Lang, Marc**
**75010 Paris (FR)**

(74) Mandataire: **Robert, Jean-Pierre et al**
**Cabinet Boettcher**
**16, rue Médéric**
**75017 Paris (FR)**

(56) Documents cités:
**EP-A- 0 790 692      EP-A- 0 858 142**
**EP-A1- 2 871 740      DE-A- 4 314 056**
**DE-C- 19 621 555**

- **TANAKA, T.; SERADA, T.; SAKAI, T.: "Simulation analysis of DC power-supply system stability", CONFERENCE PROCEEDINGS 16TH. ANNUAL IEEE APPLIED POWER ELECTRONICS CONFERENCE AND EXPOSITION (APEC 2001), vol. 2, 4 March 2001 (2001-03-04), - 8 March 2001 (2001-03-08), pages 759-764, XP010536080,**

- **SCHULZ S ET AL: "DESIGN CONSIDERATIONS FOR A DISTRIBUTED POWER SYSTEM", PROCEEDINGS OF THE ANNUAL POWER ELECTRONICS SPECIALISTS CONFERENCE. (PESC). SAN ANTONIO, JUNE 11 - 14, 1990; [PROCEEDINGS OF THE ANNUAL POWER ELECTRONICS SPECIALISTS CONFERENCE. (PESC)], NEW YORK, IEEE, US, vol. 2, 11 June 1990 (1990-06-11), pages 611-617, XP000173880,**

- **MITCHELL D M: "POWER LINE FILTER DESIGN CONSIDERATIONS FOR DC-DC CONVERTERS", IEEE INDUSTRY APPLICATIONS MAGAZINE, IEEE SERVICE CENTER, PISCATAWAY, NJ, US, vol. 5, no. 6, 1 November 1999 (1999-11-01), pages 16-26, XP000935946, ISSN: 1077-2618, DOI: 10.1109/2943.798333**

- **WANG T C ET AL: "Electrical power system stability assurance for the International Space Station", IECEC '97. PROCEEDINGS OF THE 32ND INTERSOCIETY ENERGY CONVERSION ENGINEERING CONFERENCE. AEROSPACE POWER SYSTEMS AND TECHNOLOGIES. HONOLULU, HI, JULY 27 - AUG. 1, 1997; [INTERSOCIETY ENERGY CONVERSION ENGINEERING CONFERENCE], NEW YORK, NY : IEEE, US, vol. 1, 27 July 1997 (1997-07-27), pages 246-252, XP010269022, DOI: 10.1109/IECEC.1997.659193 ISBN: 978-0-7803-4515-7**

- **NARAIN G HINGORANI: "TRANSIENT OVERVOLTAGE ON A BIPOLAR HVDC OVERHEAD LINE CAUSED BY DC LINE FAULTS", IEEE TRANSACTIONS ON POWER APPARATUS AND SYSTEMS, IEEE INC. NEW YORK, US, vol. 89, no. 4, 1 April 1970 (1970-04-01), pages 592-610, XP000565232, ISSN: 0018-9510, DOI: 10.1109/TPAS.1970.292606**

- **HRONIK S: "EFFECTIVE USE OF LINE TERMINATION IN HIGH SPEED LOGIC", WESCON CONFERENCE, IEEE CENTER, HOES LANE, US, 7 November 1995 (1995-11-07), pages 72-78, XP000586554, ISSN: 1044-6036**
- **PHILIP C TODD: "Snubber Circuits: Theory, Design and Application", INTERNET CITATION, 31 May 1993 (1993-05-31), XP002447016, Retrieved from the Internet: URL:http://focus.ti.com/lit/an/slup100/slu p100.pdf [retrieved on 2007-08-16]**
- **Horst Czichos ET AL: "9 Leitungen" In: "Hütte - Die Grundlagen der Ingenieurwissenschaften", 31 December 1996 (1996-12-31), Springer, XP055318146, pages G36-G38, * page G36 - page G38 ***

**Description**

La présente invention concerne un réseau de distribution électrique automobile utilisable par exemple pour l'alimentation des équipements électriques embarqués sur des véhicules automobiles tels que lés voitures, les camions...

Un réseau de distribution électrique automobile de type classique comprend généralement une batterie reliée à des équipements de bord du véhicule. La batterie est ainsi reliée à un alternateur pour être rechargée par celui-ci et à des équipements consommateurs d'énergie pour alimenter ceux-ci. Parmi ces équipements de type courant, on trouve notamment le démarreur, le système d'allumage, le dispositif de chauffage ou de climatisation, des éléments d'éclairage comme les projecteurs, des moteurs électriques d'actionnement des essuie-glaces, des vitres, des aérateurs...

Dans le domaine automobile, de plus en plus d'équipements électroniques de forte puissance sont utilisés. Parmi ceux-ci, on a pensé à utiliser des actionneurs électromagnétiques de soupapes qui sont des équipements fonctionnant selon un mode pulsé avec de brusques variations de puissance.

L'implantation de tels équipements a des conséquences sur le réseau. Il est ainsi nécessaire que le réseau présente une résistance faible afin de limiter les pertes par effet Joule. Pour limiter les effets des appels de courants, des condensateurs de découplage sont associés aux équipements et/ou à la batterie de sorte que le réseau a alors une capacité répartie relativement élevée. En outre, en raison de la taille et de la disposition des conducteurs du réseau, le réseau présente une inductance relativement importante.

Le réseau forme donc un circuit oscillant de type "RLC". Les appels périodiques de courant des équipements fonctionnant en mode pulsé risquent alors de mettre ce réseau en résonance provoquant une surcharge de la batterie et des condensateurs de découplage, et ce d'autant plus facilement que les équipements fonctionnent selon une fréquence d'excitation proche de la fréquence de résonance du réseau. Une telle surcharge dégrade la fiabilité de la batterie et des condensateurs et peut conduire à leur détérioration.

Un but de l'invention est de fournir un réseau de distribution fiable et économique qui comporte au moins un équipement fonctionnant en mode pulsé.

A cet effet, on prévoit, selon l'invention, un réseau de distribution électrique automobile selon la revendication 1.

L'élément résistif peut alors amortir les oscillations du réseau qui ne rentre donc pas en résonance, ce qui limite les risques d'une surcharge de l'accumulateur et des autres éléments constituant le réseau. Le condensateur bloquant le passage, vers l'élément résistif, de la composante continue du courant circulant dans le réseau, les pertes par effet Joule dans l'élément résistif sont limitées.

L'amortissement est alors particulièrement efficace.

D'autres caractéristiques et avantages de l'invention ressortiront à la lecture de la description qui suit de modes de réalisation particuliers non limitatifs de l'invention.

Il sera fait référence aux dessins annexés, parmi lesquels :

la figure 1 est une représentation schématique d'un réseau conforme à un exemple qui ne fait pas partie de l'invention,
la figure 2 est une représentation schématique d'un réseau selon l'invention.

Le réseau de distribution électrique automobile conforme à l'invention est destiné à être implanté dans un véhicule automobile pour assurer l'alimentation électrique des équipements embarqués à bord de ce véhicule.

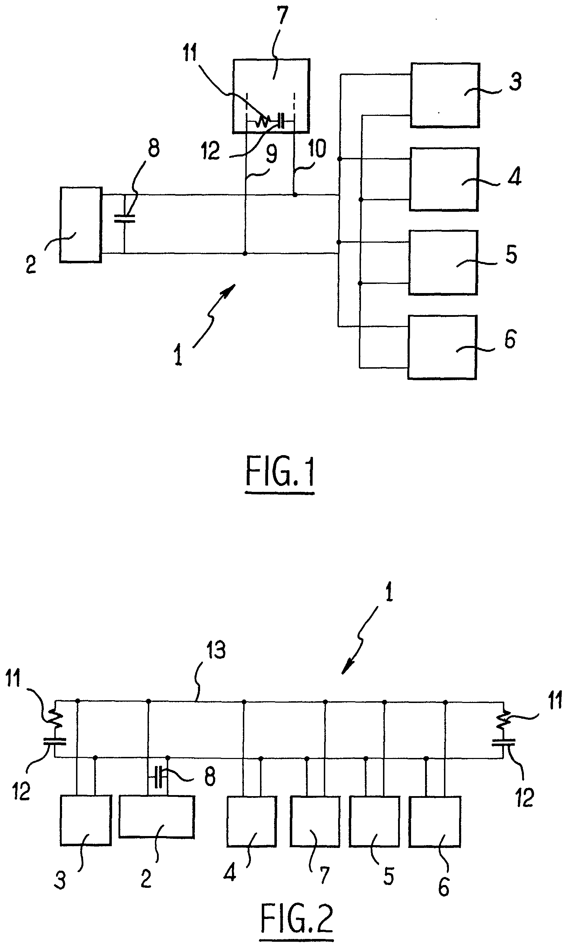

Un exemple, visible sur la figure 1 et décrit ci-après, ne fait pas partie de l'invention. En référence à la figure 1, le réseau généralement désigné en 1 est de type étoile et comprend une batterie 2 reliée à des équipements 3, 4, 5, 6, 7 et à un condensateur de découplage 8 de forte capacité relié en parallèle aux bornes de la batterie 2. Un alternateur non représenté est en outre relié à la batterie 2 pour recharger celle-ci.

Les équipements 3, 4, 5, 6 sont des équipements électriques de type classique.

L'équipement 7 est un équipement fonctionnant selon un mode pulsé comme un actionneur électromagnétique de soupapes. L'équipement 7 comprend des bornes 9, 10 de liaison à la batterie 2.

Le réseau 1 comprend un élément résistif 11 et un condensateur 12 qui sont associés en série l'un à l'autre et sont reliés entre les bornes 9, 10 de l'équipement 7.

Le dimensionnement de l'élément résistif 11 et du condensateur 12 va maintenant être explicité.

Le réseau 1 constitue un circuit oscillant ayant une fréquence de résonance qui peut être calculée de manière classique dans le domaine des circuits oscillants à partir de l'inductance équivalente du réseau et de la capacité équivalente du réseau (qui peut ici être considérée comme étant égale à la capacité du condensateur 8, cette dernière étant tellement élevée que les autres capacités du réseau peuvent être négligées).

L'élément résistif 11 et le condensateur 12 ont des valeurs telles que, à la fréquence de résonance du réseau 1, l'élément résistif 11 réalise un amortissement des oscillations du réseau 1, c'est-à-dire que la résistance de l'élément résistif 11 correspond à la résistance d'amortissement du réseau 1 proportionnelle à

$$\sqrt{L_0/C_0}$$

où Lo et Co sont respectivement l'inductance équivalente du réseau 1 et la capacité équivalente du réseau 1.

La capacité du condensateur 12 est déterminée de telle manière que l'impédance du condensateur 12 à la fréquence de résonance du réseau 1 soit très inférieure à la résistance équivalente du réseau 1.

Ainsi, lorsque l'équipement 7 fonctionne selon un mode pulsé qui engendre dans le réseau 1 des oscillations à une fréquence inférieure à la fréquence de résonance du réseau 1, la résistance du réseau 1 est relativement faible. Lorsque l'équipement 7 fonctionne selon un mode pulsé qui engendre dans le réseau 1 des oscillations à une fréquence égale ou supérieure à la fréquence de résonance du réseau 1 (notamment lorsque la fréquence d'excitation de l'équipement 7 est proche de la fréquence de résonance du réseau), le condensateur 12 devient passant et l'élément résistif 11 assure un amortissement des oscillations du réseau 1.

On notera que l'amortissement est particulièrement efficace dans un réseau en étoile lorsque comme ici l'élément résistif 11 et le conducteur 12 sont adjacents au point de distribution du réseau.

Les éléments identiques ou analogues à ceux précédemment décrits porteront une référence numérique identique dans la suite de la description qui suit du mode de réalisation représenté à la figure 2, qui fait partie de l'invention.

Dans ce mode de réalisation, la batterie 2, le condensateur 8 et les équipements 3, 4, 5, 6, 7 sont reliés les uns aux autres par un bus 13.

Ce bus 13 possède deux extrémités à chacune desquelles sont montés un élément résistif 11 et un condensateur 12.

L'élément résistif 11 et le condensateur 12 sont dimensionnés comme précédemment pour former un circuit d'amortissement du réseau 1.

L'amortissement ainsi réalisé est particulièrement efficace.

Bien entendu, l'invention n'est pas limitée au mode de réalisation décrit et on peut y apporter des variantes de réalisation sans sortir du cadre de l'invention tel que défini par les revendications.

En particulier, l'invention est applicable à tout type de réseau de distribution comme des réseaux 12 volts, 42 volts, ayant un nombre différent d'équipements...

Ce qui suit ne fait pas partie de l'invention. En outre, l'élément résistif et le condensateur peuvent être placés en tout point du réseau et par exemple en parallèle à l'accumulateur. L'élément résistif et le condensateur peuvent également être intégrés à un équipement ne fonctionnant pas en mode pulsé ou ne pas être intégrés à un équipement.

Par ailleurs, bien qu'un seul circuit d'amortissement ait été illustré dans le réseau en étoile représenté à la figure 1, plusieurs circuits d'amortissement peuvent être implantés dans le réseau pour améliorer l'amortissement. Ainsi, si les dérivations sont longues, il peut être préférable de prévoir plusieurs circuits d'amortissement adjacents à certaines des extrémités du réseau (par exemple, on dispose un circuit d'amortissement adjacent à la batterie 2 et un circuit d'amortissement adjacent à l'actionneur 6) ou de disposer un circuit d'amortissement à chaque extrémité du réseau.

## Revendications

1. Réseau de distribution électrique automobile comportant au moins deux équipements (3, 4, 5, 6, 7) reliés à un accumulateur (2), **caractérisé en ce que** l'un au moins des équipements (7) fonctionne selon un mode pulsé susceptible de créer des oscillations dans le réseau à une fréquence de résonance de celui-ci et **en ce que** le réseau comprend au moins un élément résistif (11) et un condensateur (12) qui sont associés en série et ont des valeurs déterminées pour que l'élément résistif ait une résistance égale à une résistance d'amortissement du réseau, les équipements (3, 4, 5, 6, 7) et l'accumulateur (2) étant reliés par un bus ayant deux extrémités, et le réseau comprenant deux circuits d'amortissement (11, 12) adjacents chacun à une des extrémités du bus (13).

## Patentansprüche

1. Stromverteilungsnetz für ein Kraftfahrzeug, umfassend mindestens zwei Geräte (3, 4, 5, 6, 7), die mit einem Akkumulator (2) verbunden sind, **dadurch gekennzeichnet, dass** mindestens eines der Geräte (7) in einem gepulsten Betrieb arbeitet, der dazu geeignet ist, Schwingungen in dem Netz bei einer Resonanzfrequenz desselben zu erzeugen, und dass das Netz mindestens ein Widerstandselement (11) und einen Kondensator (12) umfasst, die in Reihe geschaltet sind und vorgegebene Werte haben, damit das Widerstandselement einen Widerstand hat, der gleich einem Dämpfungswiderstand des Netzes ist, wobei die Geräte (3, 4, 5, 6, 7) und der Akkumulator (2) über einen Bus mit zwei Enden verbunden sind, und wobei das Netz zwei Dämpfungskreise (11, 12) umfasst, die jeweils an eines der Enden des Busses (13) angrenzen.

## Claims

1. Motor vehicle electrical distribution network comprising at least two devices (3, 4, 5, 6, 7) connected to an accumulator (2), **characterised in that** at least one of the devices (7) operates in a pulsed mode capable of creating oscillations in the network at a resonance frequency thereof and **in that** the network comprises at least one resistive element (11) and one condenser (12) that are connected in series and have values determined so that the resistive element has a resistance equal to a network damping resistance, the devices (3, 4, 5, 6, 7) and accumulator (2) being connected by a bus having two ends, and the network comprising two damping circuits (11, 12) each adjacent to one of the ends of the bus (13).

FIG.1

FIG.2